# EUROPEAN PATENT SPECIFICATION

(11) **EP 3 379 843 B1**
(45) Date of publication and mention of the grant of the patent: **02.09.2020**
(21) Application number: 18162573.2
(22) Date of filing: 19.03.2018
(51) Int. Cl.: H04R 1/10, H04R 3/12, H04R 5/04

(54) **ACOUSTIC SYSTEM, HEADPHONE DEVICE, LOUDSPEAKER DEVICE, AND ACOUSTIC OUTPUT METHOD**
AKUSTISCHES SYSTEM, KOPFHÖRERVORRICHTUNG, LAUTSPRECHERVORRICHTUNG UND AKUSTISCHES AUSGABEVERFAHREN
SYSTÈME ACOUSTIQUE, DISPOSITIF DE CASQUE, DISPOSITIF DE HAUT-PARLEUR ET PROCÉDÉ DE SORTIE ACOUSTIQUE

(30) Priority: 22.03.2017 JP 2017055298
(43) Date of publication of application: 26.09.2018
(73) Proprietor: YAMAHA CORPORATION, Hamamatsu-shi Shizuoka, 430-8650 (JP)
(72) Inventor: KAWAHASHI, Satsuki, Hamamatsu-shi, Shizuoka 430-8650 (JP); IWAMOTO, Kenji, Hamamatsu-shi, Shizuoka 430-8650 (JP); ISHIZAKI, Koichi, Hamamatsu-shi, Shizuoka 430-8650 (JP); KUROKI, Ryuichiro, Hamamatsu-shi, Shizuoka 430-8650 (JP); ONOZAWA, Naoyuki, Hamamatsu-shi, Shizuoka 430-8650 (JP)
(74) Representative: Ettmayr, Andreas

(56) References cited:
- JP-A- 2007 074 786
- US-A1- 2008 261 527
- US-A1- 2010 246 807
- US-A1- 2015 215 695

## Description

### CROSS-REFERENCE TO RELATED APPLICATION

Priority is claimed on Japanese Patent Application No. 2017-055298, filed March 22, 2017,

### BACKGROUND OF THE INVENTION

### Field of the Invention

The present invention relates to an acoustic system, a headphone device, a loudspeaker device, and an acoustic output method.

### Description of Related Art

In recent years, for example, a wireless headphone device that receives sound data output from a sound output device such as an electronic musical instrument through wireless communication and outputs a sound of received sound data from a headphone has been known (for example, refer to Japanese Unexamined Patent Application, First Publication No. 2007-74786). Such a headphone device is preferred in the market and widely used because a cable does not need to be drawn for the headphone device. Document US 2015 / 0 215 695 A1 discloses a loudspeaker enclosure system with detachable wireless headphones. Document US 2008 / 0 261 527 A1 discloses a Bluetooth earpiece with two-way audio transmissions.

### SUMMARY OF THE INVENTION

However, for example, when an output of a sound is switched from a headphone to a loudspeaker or the output of the sound is switched from the loudspeaker to the headphone, it is still necessary to reconnect (switch) cables in the headphone device of the related art described above, which is troublesome. That is, in the above-described headphone device of the related art, for example, there is a problem in that convenience deteriorates when the output is switched between the headphone and the loudspeaker.

The present invention has been made to solve the above problem. An exemplary object of the present invention is to provide an acoustic system, and an acoustic output method with the features of the independent claims capable of improving convenience.

### BRIEF DESCRIPTION OF THE DRAWINGS

FIG. 1 is an external view illustrating an example of an acoustic system according to a first embodiment.
FIG. 2A is a functional block diagram illustrating an example of an acoustic system according to the first embodiment.
FIG. 2B is a functional block diagram illustrating another example of an acoustic system according to the first embodiment.
FIG. 3 is a flowchart illustrating an example of an operation of a headphone device according to the first embodiment.
FIG. 4 is a flowchart illustrating an example of an operation of a loudspeaker device according to the first embodiment.
FIG. 5 is a diagram illustrating an operation example of a headphone device alone according to the first embodiment.
FIG. 6 is a diagram illustrating an operation example in which the headphone device and the loudspeaker device according to the first embodiment are connected to each other.
FIG. 7 is an external view illustrating an example of an acoustic system according to a second embodiment.
FIG. 8A is a functional block diagram illustrating the example of the acoustic system according to the second embodiment.
FIG. 8B is a functional block diagram illustrating another example of the acoustic system according to the second embodiment.
FIG. 9 is a flowchart illustrating an example of an operation of a headphone device according to the second embodiment.

### DETAILED DESCRIPTION OF THE INVENTION

Hereinafter, an acoustic system and an acoustic output method according to embodiments of the present invention will be described with reference to the drawings.

### (First embodiment)

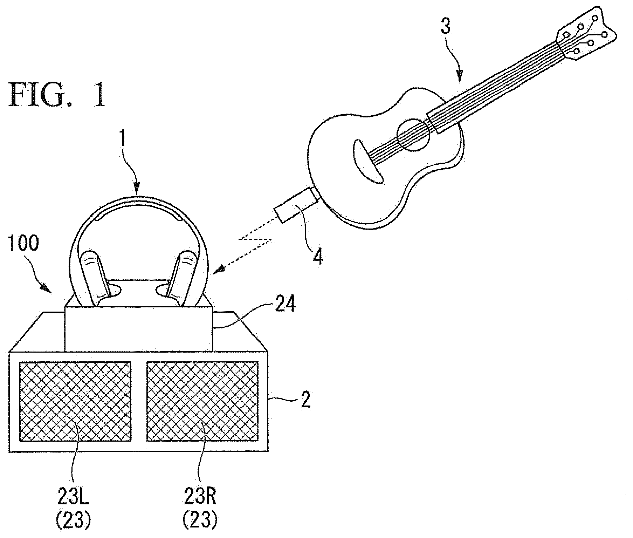

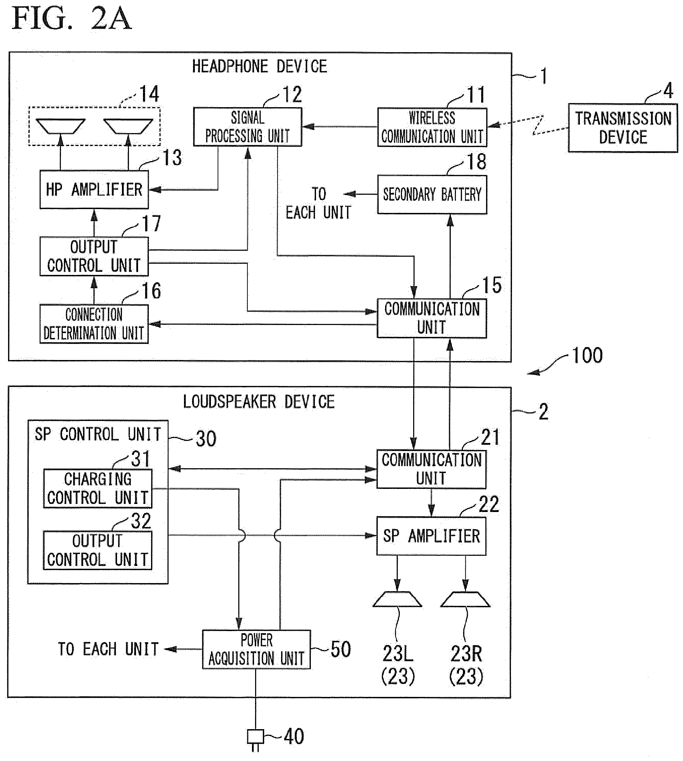

FIG. 1 is an external view illustrating an example of an acoustic system 100 according to a first embodiment. FIG. 2A is a functional block diagram illustrating an example of the acoustic system 100 according to the first embodiment.

As illustrated in FIGS. 1 and 2A, the acoustic system 100 includes a headphone device 1 and a loudspeaker device 2.

The headphone device 1 is, for example, a wireless headphone. The headphone device 1 receives sound data from playing of a musical instrument such as a guitar 3 via a transmission device 4 through wireless communication, and outputs a sound from a headphone unit 14 (headphone). The headphone device 1 is configured to be detachable from a dock unit 24 of the loudspeaker device 2 to be described below. For example, when a secondary battery 18 is charged or a sound is output from the loudspeaker device 2, the headphone device 1 is set in (mounted on) the dock unit 24 of the loudspeaker device 2.

The headphone device 1 includes a wireless communication unit 11, a signal processing unit 12, a headphone (HP) amplifier 13, a headphone unit 14, a communication unit 15, a connection determination unit 16, and an output control unit 17.

The wireless communication unit 11 performs, for example, communication with the transmission device 4 through wireless communication such as Bluetooth. The wireless communication unit 11 receives, for example, sound data from the playing of the guitar 3 from the transmission device 4. The wireless communication unit 11 supplies the received sound data, for example, to the signal processing unit 12. Here, the transmission device 4 is an example of a sound output device that outputs sound data. The wireless communication unit 11 may receive sound data from a plurality of sound output devices and supplies a plurality of types of received sound data to the signal processing unit 12.

The transmission device 4 converts the playing of the guitar 3 into sound data and transmits the sound data to the headphone device 1 through the above-described wireless communication.

The signal processing unit 12 (an example of a synthesis processing unit) is, for example, a processor such as a digital signal processor (DSP) and executes various types of signal processing of sound data received by the wireless communication unit 11. The signal processing unit 12 executes various types of signal processing and outputs sound data to the HP amplifier 13 or the communication unit 15 on the basis of a control instruction from the output control unit 17. For example, when a plurality of types of sound data arc acquired from the wireless communication unit 11, the signal processing unit 12 generates synthesized sound data obtained by synthesizing the plurality of types of sound data. That is, for example, when the plurality of types of sound data are acquired from the wireless communication unit 11, the signal processing unit 12 generates synthesized sound data by mixing the plurality of types of sound data.

The HP amplifier 13 is, for example, an amplifier with a digital to analog converter (DAC), outputs the sound signal obtained by converting and amplifying the acquired sound data to the headphone unit 14 and causes sound to be output from the headphone unit 14. The HP amplifier 13 executes processes of outputting a sound signal, stopping the output, changing a volume, or the like on the basis of the control instruction from the output control unit 17.

The headphone unit 14 is, for example, an earphone with a headband, converts the sound signal output from the HP amplifier 13 into a sound, and outputs (emits) the sound. In addition to the earphone with a headband, the headphone unit 14 may be, for example, an earphone type sound emitter that is closely mounted on an ear to directly transfer a sound to the ear, such as an inserted earphone, a supra-aural earphone, or an ear covering earphone.

The communication unit 15 is, for example, a contact type communication interface. By the communication unit 15 coming in contact with the communication unit 21 of the loudspeaker device 2, the headphone device 1 and the loudspeaker device 2 are electrically connected to each other, and the headphone device 1 and the loudspeaker device 2 perform communication. The communication unit 15 transmits, for example, the sound data output from the signal processing unit 12 to the loudspeaker device 2. Further, the communication unit 15 includes a charging electrode (not illustrated) to which charging power for charging the secondary battery 18 is supplied and supplies the charging power supplied from the loudspeaker device 2 to the secondary battery 18.

The connection determination unit 16 determines whether or not the headphone device 1 and the loudspeaker device 2 are electrically connected to each other. The connection determination unit 16 determines whether or not the headphone device 1 and the loudspeaker device 2 are electrically connected to each other on the basis of whether or not the communication unit 15 is in contact with the communication unit 21 of the loudspeaker device 2 for electrical conduction. Further, the connection determination unit 16 outputs a result of the determination as to whether or not the headphone device 1 and the loudspeaker device 2 are electrically connected to each other, to the output control unit 17.

The output control unit 17 (an example of a first output control unit) transmits the sound data received from the transmission device 4 (sound output device) that outputs the sound data, through wireless communication, to the loudspeaker device 2 when the headphone device 1 and the loudspeaker device 2 are connected to each other, and outputs a sound based on the sound data from the headphone unit 14 when the headphone device 1 (the own device) and the loudspeaker device 2 are not connected to each other.

For example, when the determination result that the headphone device 1 and the loudspeaker device 2 are electrically connected to each other is acquired from the connection determination unit 16, the output control unit 17 causes the signal processing unit 12 to output the sound data received by the wireless communication unit 11 to the communication unit 15. The output control unit 17 causes the communication unit 15 to transmit the sound data output from the signal processing unit 12 to the loudspeaker device 2. Further, when the headphone device 1 and the loudspeaker device 2 are connected to each other, the output control unit 17 stops the output of the headphone unit 14. When the wireless communication unit 11 receives a plurality of types of sound data in parallel, the output control unit 17 causes the synthesized sound data generated on the basis of the plurality of types of sound data by the signal processing unit 12 to be output to the loudspeaker device 2 via the communication unit 15. Further, the output control unit 17 may cause the determination result acquired from the connection determination unit 16 to be transmitted to the loudspeaker device 2 via the communication unit 15.

Further, for example, when the determination result that the headphone device 1 and the loudspeaker device 2 are not electrically connected to each other is acquired from the connection determination unit 16, the output control unit 17 causes the signal processing unit 12 to output the sound data received by the wireless communication unit 11 to the HP amplifier 13. The output control unit 17 causes the HP amplifier 13 to convert the sound data output by the signal processing unit 12 into a sound signal and output the sound signal to the headphone unit 14. Accordingly, the headphone unit 14 outputs (emits) the sound based on the sound data received by the wireless communication unit 11 from the headphone unit 14.

When the wireless communication unit 11 receives a plurality of types of sound data in parallel, the output control unit 17 causes the synthesized sound data generated on the basis of the plurality of types of sound data by the signal processing unit 12 to be output to the HP amplifier 13 and causes the sound based on the synthesized sound data to be output to the headphone unit 14.

The secondary battery 18 is, for example, a storage battery such as a lithium-ion battery or a nickel-hydrogen storage battery and supplies power to each unit of the headphone device 1. That is, the secondary battery 18 supplies power for operating the own device (the headphone device 1). Further, when the headphone device 1 and the loudspeaker device 2 are electrically connected to each other, the secondary battery 18 is charged with the charging power supplied from the loudspeaker device 2 via the communication unit 15.

The loudspeaker device 2 is connectable to the headphone device 1 and outputs sound from loudspeakers (23L, 23R). Further, the loudspeaker device 2 functions as a charging dock (a charging stand), and when the headphone device 1 and the loudspeaker device 2 are connected to each other, the loudspeaker device 2 supplies charging power to the secondary battery 18 included in the headphone device 1, and charges the secondary battery 18.

The loudspeaker device 2 includes the communication unit 21, a loudspeaker (SP) amplifier 22, the loudspeakers (23L, 23R), and an SP control unit 30. The loudspeaker device 2 further includes a plug 40 (omitted in Fig. 1) and a power acquisition 50.

In the embodiment, the loudspeaker 23L and the loudspeaker 23R have the same configuration and will be described as a loudspeaker 23 when an arbitrary loudspeaker included in the loudspeaker device 2 is indicated or when the loudspeaker 23L and the loudspeaker 23R are not particularly distinguished.

The communication unit 21 is, for example, a contact type communication interface. By the communication unit 21 coming in contact with the communication unit 15 of the headphone device 1, the headphone device 1 and the loudspeaker device 2 are electrically connected to each other, and the headphone device 1 and the loudspeaker device 2 perform communication. The communication unit 21 receives the sound data transmitted from the communication unit 15 of the headphone device 1. Further, the communication unit 21 includes a charging electrode (not illustrated) to which charging power for charging the secondary battery 18 is supplied, and supplies the charging power of the secondary battery 18 to the secondary battery 18 via the communication unit 15.

The SP amplifier 22 is, for example, an amplifier with a DAC. The SP amplifier 22 outputs a sound signal obtained by converting and amplifying the sound data received by the communication unit 21 to the loudspeaker 23 to cause a sound to be output from the loudspeaker 23. The SP amplifier 22 executes processes of outputting a sound signal, stopping the output, changing a volume, or the like on the basis of the control instruction from the output control unit 32.

The loudspeaker 23 constitutes the loudspeaker 23L, the loudspeaker 23R, and a stereo loudspeaker and converts the sound signal output from the SP amplifier 22 into a sound and outputs (emits) the sound.

The SP control unit 30 is a processor including, for example, a central processing unit (CPU) and performs overall control of the loudspeaker device 2. The SP control unit 30 includes a charging control unit 31 and an output control unit 32.

When the headphone device 1 and the loudspeaker device 2 are connected to each other, the charging control unit 31 controls supply of charging power for charging the secondary battery 18. Note that the charging control unit 31 determines whether or not the headphone device 1 and the loudspeaker device 2 are electrically connected to each other, for example, on the basis of the determination result of the connection determination unit 16 acquired via the communication unit 21. When the headphone device 1 and the loudspeaker device 2 are connected to each other, the charging control unit 31 causes the communication unit 21 to supply the charging power of the secondary battery 18 to charge the secondary battery 18. When the charging control unit 31 acquires, for example, information indicating that the charging of the secondary battery 18 is completed via the communication unit 21, the charging control unit 31 may stop the supply of the charging power to the communication unit 21.

When the headphone device 1 and the loudspeaker device 2 are connected to each other, the output control unit 32 (an example of a second output control unit) causes a sound based on the sound data transmitted from the headphone device 1 to be output from the loudspeaker 23. When the headphone device 1 and the loudspeaker device 2 are connected to each other, the output control unit 32 causes the sound data received from the headphone device 1 to be output to the SP amplifier 22 via the communication unit 21 and causes the sound based on the sound data to be output to the loudspeaker 23.

Note that when the above-described wireless communication unit 11 receives a plurality of types of sound data in parallel, the output control unit 32 causes a sound based on synthesized sound data that the signal processing unit 12 has generated on the basis of the plurality of types of sound data to be output to the loudspeaker 23.

Further, the output control unit 32 stops the output of the loudspeaker 23 when the headphone device 1 and the loudspeaker device 2 are not connected to each other.

The plug 40 is inserted into a socket to acquire power. The power acquisition unit 50 acquires power via the plug 40 and supplies the acquired power to each unit of the headphone device 1. That is, the power acquisition unit 50 supplies power for operating the own device (the loudspeaker device 2). The power acquisition unit 50 supplies power to the communication unit 21 in accordance with the control of the charging control unit 31, and the communication unit 21 supplies the power to the secondary battery 18.

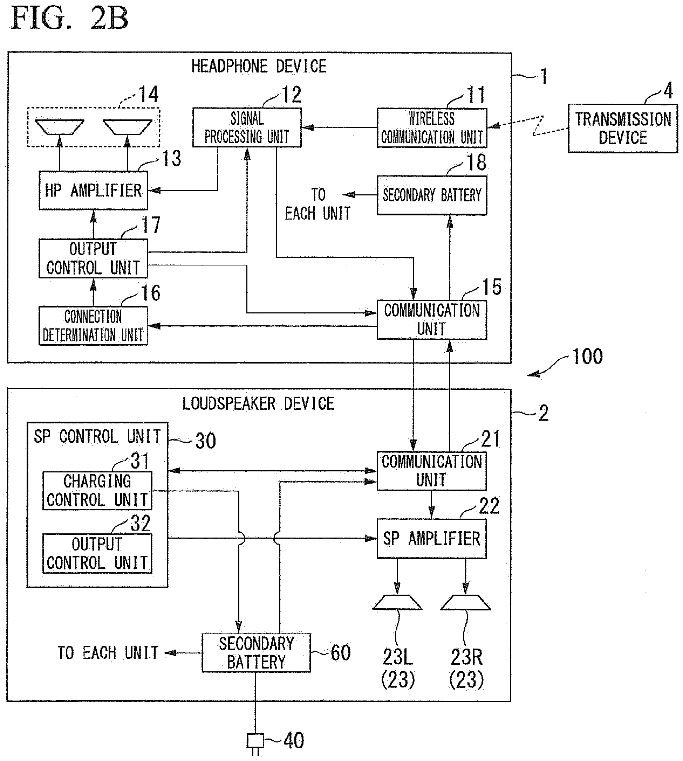

FIG. 2B is a functional block diagram illustrating another example of the acoustic system 100 according to the first embodiment. The acoustic system 100 in FIG. 2B is different from that in FIG. 2A in that the loudspeaker device 2 includes a secondary battery 60 in place of the power acquisition unit 50.

The secondary battery 60 is, for example, a storage battery such as a lithium-ion battery or a nickel-hydrogen storage battery and supplies power to each unit of the loudspeaker device 1. That is, the power acquisition unit 50 supplies power for operating the own device (the loudspeaker device 2). The secondary battery 60 is charged with the charging power supplied via the plug 40. The secondary battery 60 supplies power to the communication unit 21 in accordance with the control of the charging control unit 31, and the communication unit 21 supplies the power to the secondary battery 18.

Next, an operation of the acoustic system 100 according to the embodiment will be described with reference to the drawings.

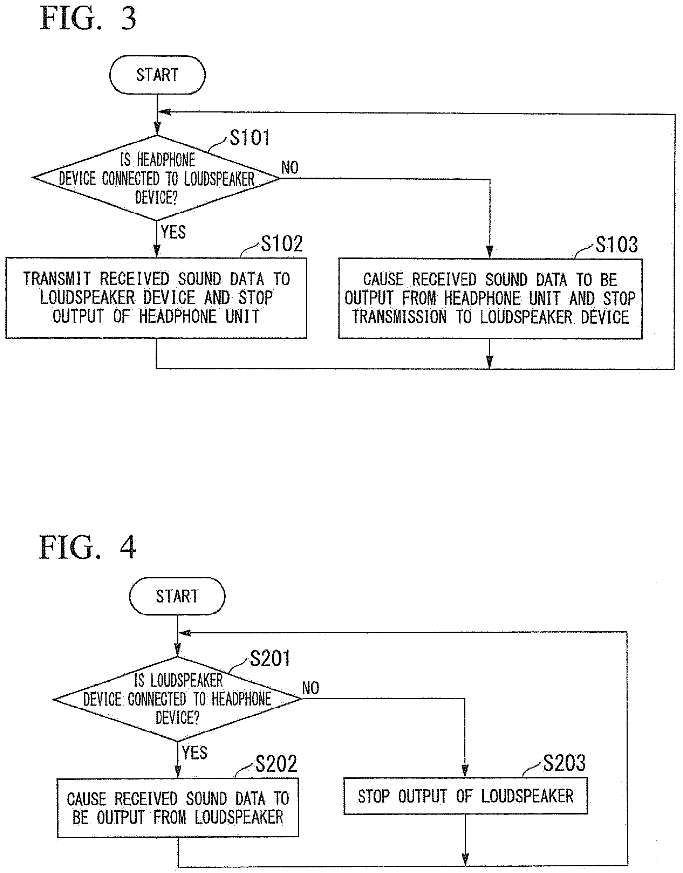

FIG. 3 is a flowchart illustrating an example of an operation of the headphone device 1 according to the embodiment. Note that FIG. 3 illustrates an example of an acoustic output control process of the headphone device 1.

In FIG. 3, first, the headphone device 1 determines whether or not the headphone device 1 is connected to the loudspeaker device 2 (step S101). The connection determination unit 16 of the headphone device 1 determines whether or not the headphone device 1 and the loudspeaker device 2 are electrically connected to each other on the basis of whether or not the communication unit 15 is in contact with the communication unit 21 of the loudspeaker device 2 for electrical conduction and outputs a determination result to the output control unit 17. The output control unit 17 determines whether or not the own device (the headphone device 1) and the loudspeaker device 2 are connected to each other on the basis of the determination result of the connection determination unit 16. When the own device (the headphone device 1) and the loudspeaker device 2 are connected to each other (step S101: YES), the output control unit 17 proceeds to a process of step S102. When the own device (the headphone device 1) and the loudspeaker device 2 are not connected to each other (step S101: NO), the output control unit 17 proceeds to a process of step S103.

In step S102, the output control unit 17 transmits the received sound data to the loudspeaker device 2 and stops the output of the headphone unit 14. The output control unit 17 causes the signal processing unit 12 to output the sound data received by the wireless communication unit 11 to the communication unit 15. The output control unit 17 causes the communication unit 15 to transmit the sound data output from the signal processing unit 12 to the loudspeaker device 2. Further, the output control unit 17 stops the output of the headphone unit 14 and mutes the headphone unit 14. After the process of step S102, the output control unit 17 returns the process to step S101.

Further, in step S103, the output control unit 17 causes the received sound data to be output from the headphone unit 14, and stops transmission to the loudspeaker device 2. For example, the output control unit 17 causes the signal processing unit 12 to output the sound data received by the wireless communication unit 11 to the HP amplifier 13. The output control unit 17 causes the HP amplifier 13 to convert the sound data output by the signal processing unit 12 into a sound signal and output the sound signal to the headphone unit 14. Accordingly, the headphone unit 14 outputs (emits) sound based on the sound data received by the wireless communication unit 11 from the headphone unit 14. Further, the output control unit 17 causes the signal processing unit 12 to stop the output of the sound data to be transmitted to the loudspeaker device 2 and causes the communication unit 15 to stop the transmission to the loudspeaker device 2. After the process of step S103, the output control unit 17 returns the process to step S101.

As described above, when the headphone device 1 and the loudspeaker device 2 are connected to each other, the headphone device I transmits, for example, the sound data received from the transmission device 4 to the loudspeaker device 2 through wireless communication and stops the output of the headphone unit 14 to mute the sound. When the headphone device 1 and the loudspeaker device 2 are not connected to each other, the headphone device 1 outputs a sound based on the sound data from the headphone unit 14.

Next, an example of an operation of the loudspeaker device 2 according to the embodiment will be described with reference to FIG. 4.

FIG. 4 is a flowchart illustrating an example of the operation of the loudspeaker device 2 according to the embodiment.

Note that the example illustrated in FIG. 4 is an example of an acoustic output control process of the loudspeaker device 2.

In FIG. 4, first, the loudspeaker device 2 determines whether or not the loudspeaker device 2 is connected to the headphone device 1 (step S201). The output control unit 32 of the loudspeaker device 2 determines, for example, whether or not the headphone device 1 and the own device (the loudspeaker device 2) are connected to each other on the basis of the determination result of the connection determination unit 16. When the headphone device 1 and the own device (the loudspeaker device 2) are connected to each other (step S201: YES), the output control unit 32 proceeds to a process of step S202. When the headphone device 1 and the own device (the loudspeaker device 2) are not connected to each other (step S201: NO), the output control unit 32 proceeds to a process of step S203.

In step S202, the output control unit 32 causes the received sound data to be output from the loudspeaker 23. The output control unit 32 causes the SP amplifier 22 to convert the sound data received from the headphone device 1 by the communication unit 21 into a sound signal and to output the sound signal to the loudspeaker 23. Accordingly, the loudspeaker 23 outputs (emits) sound based on the sound data received from the headphone device 1 from the loudspeaker 23. After the process of step S202, the output control unit 32 returns the process to step S201.

In step S203, the output control unit 32 stops the output of the loudspeaker 23. The output control unit 32 stops, for example, the output of the sound signal to the SP amplifier 22 and mutes the loudspeaker 23. After the process of step S203, the output control unit 32 returns the process to step S201.

As described above, when the headphone device 1 and the loudspeaker device 2 are connected to each other, the loudspeaker device 2 outputs the sound data received from the headphone device 1 to the loudspeaker 23. When the headphone device 1 and the loudspeaker device 2 are not connected to each other, the loudspeaker device 2 stops the output of the loudspeaker 23 and mutes the loudspeaker 23.

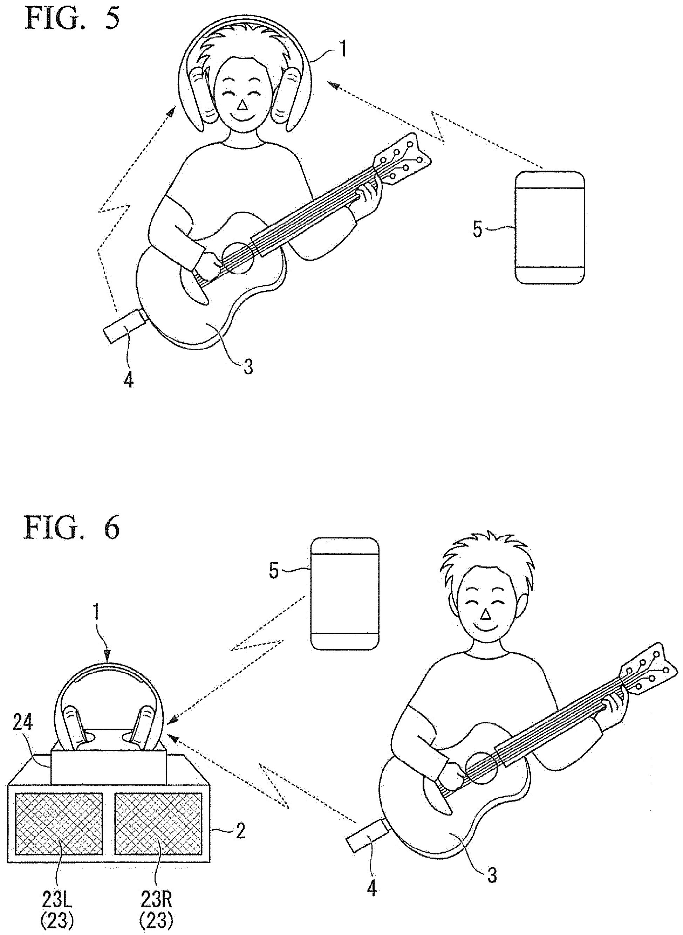

FIG. 5 is a diagram illustrating an operation example of the headphone device 1 alone according to the embodiment.

In the example illustrated in FIG. 5, an example in which sound obtained by synthesizing (mixing) sound data played on the guitar 3 and sound data output by the smartphone 5 is caused to be output from the headphone device 1 will be described.

The transmission device 4 converts the playing of the guitar 3 into sound data and transmits the sound data to the headphone device 1 through wireless communication. Further, the smartphone 5 transmits reproduced sound data to the headphone device 1 through wireless communication.

The wireless communication unit 11 of the headphone device 1 receives the sound data into which the transmission device 4 has converted the playing of the guitar 3 through wireless communication, and receives the sound data transmitted from the smartphone 5 through wireless communication.

Next, the signal processing unit 12 of the headphone device 1 synthesizes the sound data received from the transmission device 4 by the wireless communication unit 11 and the sound data received from the smartphone 5 by the wireless communication unit 11, and generates synthesized sound data.

In the example illustrated in FIG. 5, since the headphone device 1 and the loudspeaker device 2 are not connected to each other, the output control unit 17 of the headphone device 1 causes the HP amplifier 13 to convert the synthesized sound data synthesized by the signal processing unit 12 into a sound signal and causes the headphone unit 14 to output sound based on the sound signal. A user of an acoustic system 100 (the headphone device 1) can listen to the playing of the guitar 3 and the playback sound of the smartphone 5 from the headphone unit 14 while playing the guitar 3 by wearing the headphone device 1 on a head portion.

Note that, even when only one of the playing of the guitar 3 and the playback of the smartphone 5 is performed, the user can similarly listen to the playing of the guitar 3 or the playback sound of the smartphone 5 from the headphone unit 14 by wearing the headphone device 1 on the head portion.

Further, FIG. 6 is a diagram illustrating an operation example in which the headphone device 1 and the loudspeaker device 2 are connected to each other according to the embodiment.

When the sound is caused to be output from the loudspeaker device 2, a user mounts the headphone device 1 on the dock unit 24 of the loudspeaker device 2 to electrically connect the headphone device 1 to the loudspeaker device 2, as illustrated in FIG. 6.

In FIG. 6, first, the wireless communication unit 11 of the headphone device 1 receives the sound data into which the transmission device 4 has converted the playing of the guitar 3 through wireless communication, receives the sound data transmitted from the smartphone 5 through wireless communication, and generates synthesized sound data obtained through synthesis with the sound data received by the signal processing unit 12. In the example illustrated in FIG. 6, since the headphone device 1 and the loudspeaker device 2 are connected to each other, the output control unit 17 of the headphone device 1 causes the communication unit 15 to transmit the synthesized sound data of the signal processing unit 12 to the loudspeaker device 2. Further, the output control unit 17 causes the SP amplifier 22 to stop the output of the headphone unit 14 and mute the headphone unit 14.

Further, the communication unit 21 of the loudspeaker device 2 receives the synthesized sound data transmitted from the headphone device 1. The output control unit 32 of the loudspeaker device 2 causes the SP amplifier 22 to convert the sound data received from the headphone device 1 by the communication unit 21 into a sound signal and output the sound signal to the loudspeaker 23. Accordingly, the loudspeaker device 2 outputs (emits) a sound based on the synthesized sound data obtained by synthesizing the sound data of the playing of the guitar 3 and the sound data played back by the smartphone 5 from the loudspeaker 23, and the user can confirm the playing from the loudspeaker 23.

Note that, even when only one of the playing of the guitar 3 and the playback of the smartphone 5 is performed, the user can similarly listen to the playing of the guitar 3 or the playback sound of the smartphone 5 from the loudspeaker 23 by mounting the headphone device 1 on the dock unit 24 of the loudspeaker device 2.

As described above, the acoustic system 100 according to the embodiment includes the headphone device 1 that outputs the sound from the headphone unit 14 (the headphone), and the loudspeaker device 2 that is connectable to the headphone device 1 and outputs the sound from the loudspeaker 23. The headphone device 1 includes the output control unit 17 (the first output control unit) that transmits the sound data received through wireless communication from the sound output device (for example, the transmission device 4 or the smartphone 5) that outputs sound data, to the loudspeaker device 2 when the headphone device 1 and the loudspeaker device 2 are connected to each other and causes the sound based on the sound data to be output from the headphone unit 14 when the headphone device 1 (the own device) and the loudspeaker device 2 are not connected to each other. The loudspeaker device 2 includes the output control unit 32 (the second output control unit) that causes the sound based on the sound data transmitted from the headphone device 1 to be output from the loudspeaker 23 when the headphone device 1 and the loudspeaker device 2 are connected to each other.

Thus, the acoustic system 100 according to the embodiment can switch a sound output destination according to whether or not the headphone device 1 and the loudspeaker device 2 are connected to each other. Therefore, in the acoustic system 100 according to the embodiment, cables do not need to be reconnected (switched), for example, when the output of the sound is switched from the headphone unit 14 to the loudspeaker 23 or the output of the sound is switched from the loudspeaker 23 to the headphone unit 14. Therefore, the acoustic system 100 according to the embodiment can improve convenience when switching between the outputs of the headphone unit 14 and the loudspeaker 23 is performed.

Further, in the embodiment, the output control unit 17 transmits the sound data to the loudspeaker device 2 and stops the output of the headphone unit 14 when the headphone device 1 and the loudspeaker device 2 are connected to each other. The output control unit 32 stops the output of the loudspeaker 23 when the headphone device 1 and the loudspeaker device 2 are not connected to each other.

Thus, the acoustic system 100 according to the embodiment can appropriately perform switching so that the sound is output from one of the headphone unit 14 and the loudspeaker 23 according to whether or not the headphone device 1 and the loudspeaker device 2 are connected to each other.

Further, in the embodiment, the headphone device 1 includes the signal processing unit 12 (a synthesis processing unit) that generates the synthesized sound data on the basis of the plurality of types of sound data received from a plurality of sound output devices (for example, the transmission device 4 and the smartphone 5). The output control unit 17 transmits the synthesized sound data generated by the signal processing unit 12 to the loudspeaker device 2 when the headphone device 1 and the loudspeaker device 2 are connected to each other and outputs the sound based on the synthesized sound data generated by the signal processing unit 12 from the headphone unit 14 when the headphone device 1 and the loudspeaker device 2 are not connected to each other.

Thus, in the acoustic system 100 according to the embodiment, the user can enjoy listening to the sound data from a plurality of sound sources, and thereby convenience is further improved.

Further, in the embodiment, the headphone device 1 includes the secondary battery 18 that supplies power for operating the own device. The loudspeaker device 2 includes the charging control unit 31 that controls supply of the charging power for charging the secondary battery 18 when the headphone device 1 and the loudspeaker device 2 are connected to each other.

Accordingly, the acoustic system 100 according to the embodiment can charge the secondary battery 18 that supplies power for operating the headphone device 1 while the sound is being output from the loudspeaker device 2 and can also output the sound from the loudspeaker device 2 while the secondary battery 18 is being charged. That is, in the acoustic system 100 according to the embodiment, it is possible to effectively use a period during which the headphone device 1 is generally unavailable while the headphone device 1 is being charged, by outputting sound from the loudspeaker device 2. Therefore, the acoustic system 100 according to the embodiment can further improve the convenience.

Further, the headphone device 1 according to the embodiment is the headphone device 1 of the acoustic system 100 including the headphone device 1 and the loudspeaker device 2, and includes the output control unit 17. The output control unit 17 transmits the sound data received through wireless communication from the sound output device (for example, the transmission device 4 or the smartphone 5) that outputs the sound data, to the loudspeaker device 2 when the own device (the headphone device 1) and the loudspeaker device 2 are connected to each other and causes the sound based on the sound data to be output from the headphone unit 14 when the own device (the headphone device 1) and the loudspeaker device 2 are not connected to each other.

Accordingly, the headphone device 1 according to the embodiment achieves the same effects as the acoustic system 100 according to the above-described embodiment, and can improve the convenience.

Further, the loudspeaker device 2 according to the embodiment is the loudspeaker device 2 of the acoustic system 100 including the headphone device 1 and the loudspeaker device 2, and includes the output control unit 32. When the headphone device 1 and the own device (the loudspeaker device 2) are connected to each other, the output control unit 32 causes the sound based on the sound data that the headphone device 1 has received through wireless communication from the sound output device (for example, the transmission device 4 or the smartphone 5) that outputs the sound data, which is the sound data transmitted from the headphone device 1, to be output from the loudspeaker 23.

Thus, the loudspeaker device 2 according to the embodiment achieves the same effects as the acoustic system 100 according to the embodiment described above, thereby improving the convenience.

The acoustic output method according to the embodiment is an acoustic output method of the acoustic system 100 including the headphone device 1 and the loudspeaker device 2 and includes a first output control step and a second output control step. In the first output control step, the headphone device 1 transmits the sound data received through wireless communication from the sound output device (for example, the transmission device 4 or the smartphone 5) that outputs the sound data, to the loudspeaker device 2 when the headphone device 1 and the loudspeaker device 2 are connected to each other and causes the sound based on the sound data to be output from the headphone unit 14 when the headphone device 1 and the loudspeaker device 2 are not connected to each other. In the second output control step, when the headphone device 1 and the loudspeaker device 2 are connected to each other, the loudspeaker device 2 causes the sound based on the sound data transmitted from the headphone device 1 to be output from the loudspeaker 23.

Accordingly, the acoustic output method according to the embodiment achieves the same effects as those of the acoustic system 100 according to the embodiment described above, and can improve the convenience.

### (Second embodiment)

Next, the acoustic system 100a according to a second embodiment will be described with reference to the drawings.

In the first embodiment described above, the example in which the connection between the headphone device 1 and the loudspeaker device 2 is performed by the contact type communication interface has been described. However, a case in which the connection between the headphone device 1 and the loudspeaker device 2 is performed through non-contact communication will be described in the second embodiment.

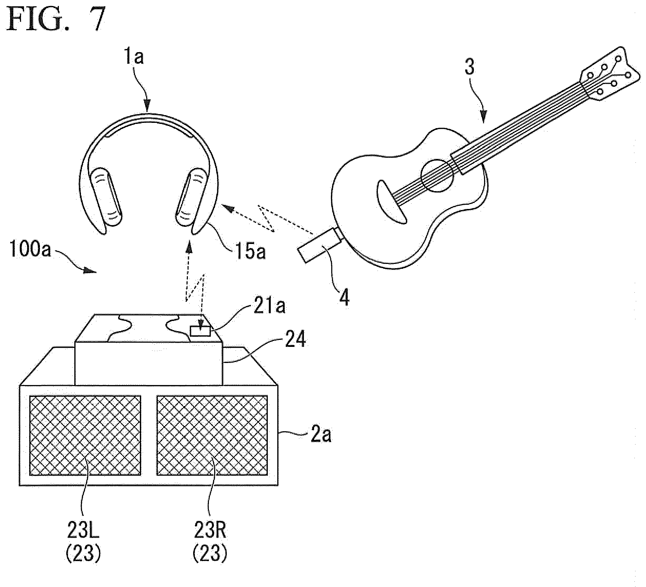

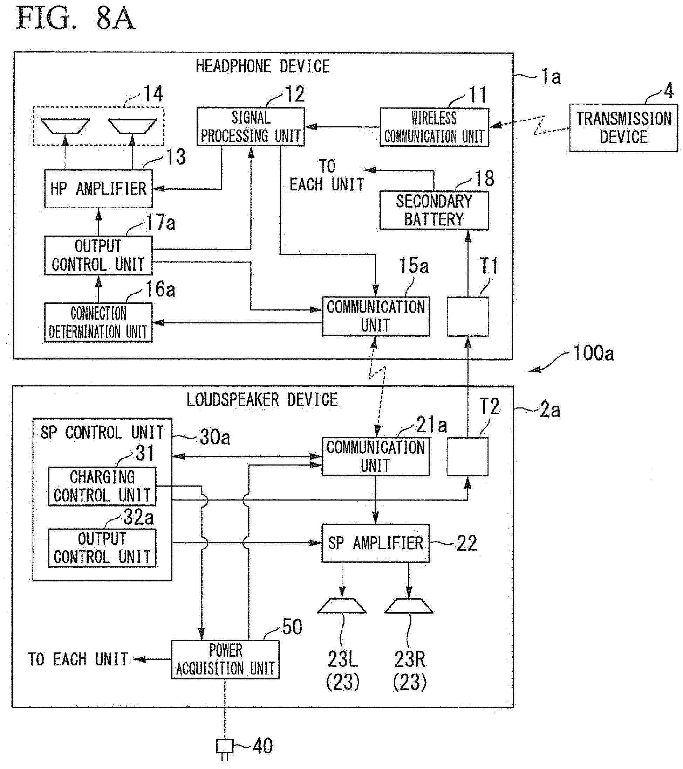

FIG. 7 is an external view illustrating an example of an acoustic system 100a according to the second embodiment. FIG. 8A is a functional block diagram illustrating an example of the acoustic system 100a according to the embodiment.

As illustrated in FIGS. 7 and 8A, the acoustic system 100a includes a headphone device 1a and a loudspeaker device 2a.

Note that, in FIGS. 7 and 8A, the same components as those illustrated in FIGS. 1 and 2 are denoted by the same reference numerals, and description thereof is omitted.

The headphone device 1a is, for example, a wireless headphone and is configured to be detachable from a dock unit 24 of the loudspeaker device 2a. The headphone device 1 a includes a wireless communication unit 11, a signal processing unit 12, an HP amplifier 13, a headphone unit 14, a communication unit 15a, a connection determination unit 16a, an output control unit 17a, and a charging terminal T1.

The communication unit 15a is, for example, a non-contact type communication interface using infrared rays. Through non-contact with the communication unit 21a of the loudspeaker device 2a, the headphone device 1a and the loudspeaker device 2a are electrically connected to each other, and the headphone device 1a and the loudspeaker device 2a perform communication. The communication unit 15a transmits, for example, the sound data output from the signal processing unit 12 to the loudspeaker device 2a. Note that the communication unit 15a is configured to be able to measure a distance between the headphone device 1a and the loudspeaker device 2a, for example, using infrared rays.

The charging terminal T1 is a terminal for supplying charging power to a secondary battery 18 and is supplied with charging power by coming in contact with a charging terminal T2 of a loudspeaker device 2A to be described below.

The connection determination unit 16a determines whether or not the headphone device 1a and the loudspeaker device 2a are electrically connected to each other. The connection determination unit 16a determines whether or not the headphone device 1a and the loudspeaker device 2a are electrically connected to each other, for example, on the basis of whether or not the communication unit 15a can communicate with the communication unit 21a of the loudspeaker device 2a. The connection determination unit 16a outputs a result of the determination as to whether or not the headphone device 1a and the loudspeaker device 2a are electrically connected to each other, to the output control unit 17a. When the headphone device 1a and the loudspeaker device 2a are electrically connected to each other, the connection determination unit 16a outputs a distance between the headphone device 1 a and the loudspeaker device 2a to the output control unit 17a.

When the headphone device 1a and the loudspeaker device 2 are connected to each other, the output control unit 17a (an example of a first output control unit) transmits sound data to the loudspeaker device 2a and causes sound based on the sound data to be output from the headphone unit 14. The output control unit 17a changes, for example, a ratio between a volume of the sound data to be transmitted to the loudspeaker device 2a and a volume of the sound data to be output from the headphone unit 14 according to the distance between the headphone device 1a and the loudspeaker device 2a.

When the distance between the headphone device 1a and the loudspeaker device 2a becomes, for example, 2 m (meters) or less, the connection determination unit 16a determines that the headphone device 1a and the loudspeaker device 2a are connected to each other. When the distance between the headphone device 1a and the loudspeaker device 2a is within 2 m, the output control unit 17a performs control so that the volume of the sound data to be transmitted to the loudspeaker device 2 is increased and the volume of the sound data to be output from the headphone unit 14 is decreased as the distance between the headphone device 1a and the loudspeaker device 2a is smaller. The output control unit 17a causes the signal processing unit 12 to change the volume of the sound data.

Further, when the headphone device 1a and the loudspeaker device 2a are connected to each other through contact (for example, when the distance is 0 m), the output control unit 17a stops the output of the headphone unit 14.

For example, when the distance between the headphone device 1a and the loudspeaker device 2a is 2 m or more, the output control unit 17a sets the volume of the sound data to be output from the headphone unit 14 to 100% and sets the volume of the sound data to be output to the loudspeaker device 2a to 0 (zero; silence).

For example, when the distance between the headphone device 1a and the loudspeaker device 2a is 1 m, the output control unit 17a sets the volume of the sound data to be output from the headphone unit 14 to 50% that is half (1/2) and sets the volume of the sound data to be transmitted to the loudspeaker device 2a to 50% that is half (1/2). For example, when the distance between the headphone device 1a and the loudspeaker device 2a is 0 m, the output control unit 17a sets the volume of the sound data to be output from the headphone unit 14 to 0 (zero; silence), and sets the volume of the sound data to be transmitted to the loudspeaker device 2a to 100%.

Thus, in the embodiment, the output control unit 17a gradually decreases a volume of the output of the sound from the headphone unit 14 for fade-out and gradually increases a volume of the output of the sound to the loudspeaker device 2a for fade-in as the headphone device 1a is closer to the loudspeaker device 2a.

The functions of the other output control unit 17a are the same as those of the first embodiment described above.

The loudspeaker device 2a is connectable to the headphone device 1a and outputs sound from the loudspeaker 23 (23L, 23R). Further, the loudspeaker device 2a functions as a charging dock (a charging stand), and supplies charging power to the secondary battery 18 included in the headphone device 1a to charge the secondary battery 18 when the headphone device 1a and the loudspeaker device 2a are connected to each other through contact.

Further, the loudspeaker device 2a includes a communication unit 21 a, an SP amplifier 22, a loudspeaker 23 (23L, 23R), an SP control unit 30a, and a charging terminal T2.

The communication unit 21a is, for example, a non-contact type communication interface using infrared rays. Through non-contact with the communication unit 21 a of the loudspeaker device 2a, the headphone device 1a and the loudspeaker device 2a are electrically connected to each other, and the headphone device 1a and the loudspeaker device 2a perform communication. The communication unit 21a receives the sound data transmitted from the communication unit 15a of the headphone device 1a.

The charging terminal T2 is a terminal for supplying charging power to the secondary battery 18 and supplies the charging power by coming in contact with the charging terminal T1 of the loudspeaker device 2a to be described below.

The SP control unit 30a is, for example, a processor including a CPU or the like and performs overall control of the loudspeaker device 2a. The SP control unit 30a includes a charging control unit 31 and an output control unit 32a.

When the headphone device 1a and the loudspeaker device 2a are connected to each other through non-contact communication, the output control unit 32a (an example of a second output control unit) outputs sound based on the sound data transmitted from the headphone device 1a, from the loudspeaker 23. When the headphone device 1a and the loudspeaker device 2a are connected to each other through non-contact communication, the output control unit 32a causes the sound data received from the headphone device 1 a to be output to the SP amplifier 22 via the communication unit 21a and causes the loudspeaker 23 to output the sound based on the sound data.

The power acquisition unit 50 supplies power to the charging terminal T2 in accordance with the control of the charging control unit 31, and the charging terminal T2 supplies the power to the secondary battery 18.

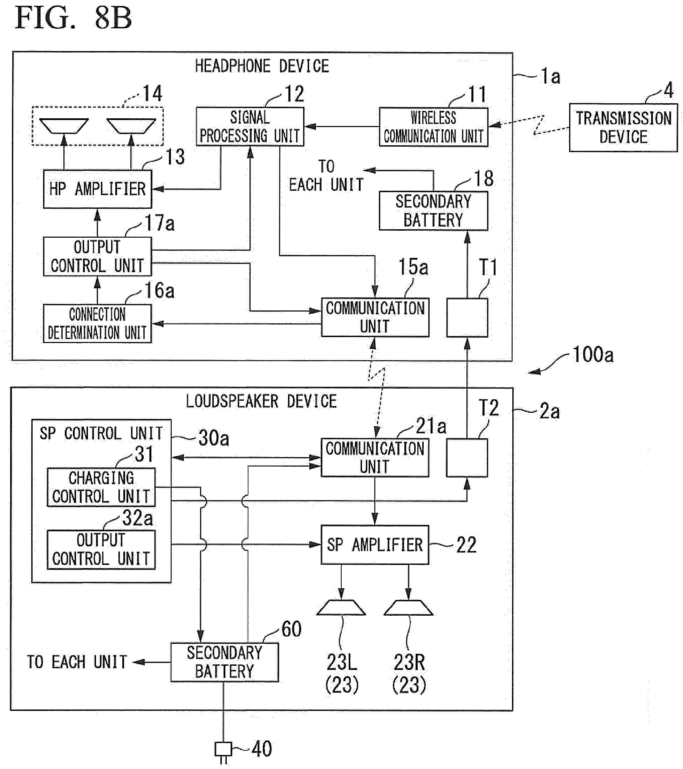

FIG. 8B is a functional block diagram illustrating another example of the acoustic system 100a according to the second embodiment. The acoustic system 100a in FIG. 8B is different from that in FIG. 8A in that the loudspeaker device 2a includes the secondary battery 60 in place of the power acquisition unit 50.

The secondary battery 60 supplies power to the charging terminal T2 in accordance with the control of the charging control unit 31, and the charging terminal T2 supplies the power to the secondary battery 18.

Next, an operation of the acoustic system 100a according to the embodiment will be described with reference to the drawings.

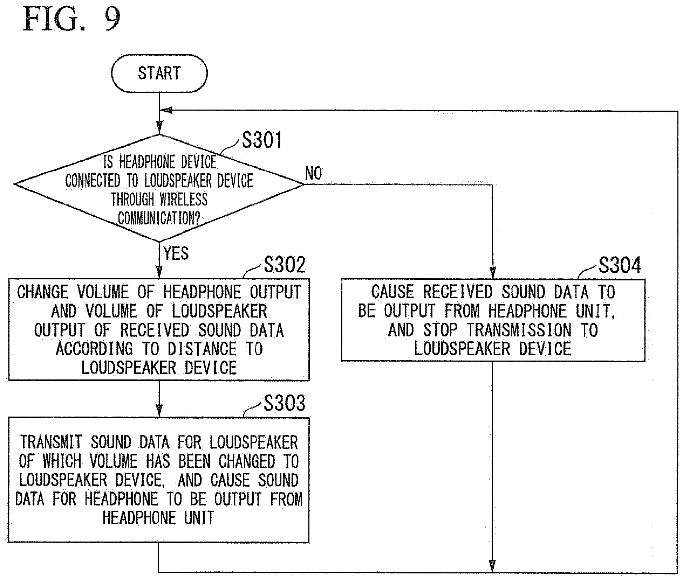

FIG. 9 is a flowchart illustrating an example of an operation of the headphone device 1a according to the embodiment. Note that FIG. 9 illustrates an example of an acoustic output control process of the headphone device 1a.

In FIG. 9, first, the headphone device 1a determines whether or not the headphone device 1 is connected to the loudspeaker device 2a through non-contact communication (step S301). The connection determination unit 16a of the headphone device 1a determines whether or not the headphone device 1a and the loudspeaker device 2a are electrically connected to each other through noncontact communication between the communication unit 15a and the communication unit 21a of the loudspeaker device 2a and outputs a result of the determination to the output control unit 17a. The output control unit 17a determines whether or not the own device (the headphone device 1a) and the loudspeaker device 2a are connected to each other on the basis of the determination result of the connection determination unit 16a. When the own device (headphone device 1a) and the loudspeaker device 2a are connected to each other (step S301: YES), the output control unit 17a proceeds to a process of step S302. When the own device (headphone device 1a) and the loudspeaker device 2a are not connected to each other (step S301: NO), the output control unit 17a proceeds to a process of step S304.

In step S302, the output control unit 17a changes a volume of a headphone output and a volume of a loudspeaker output of the received sound data according to the distance to the loudspeaker device 2a. The output control unit 17a acquires the distance between the headphone device 1a and the loudspeaker device 2a from the connection determination unit 16a and changes a volume of the sound data to be transmitted to the loudspeaker device 2a and the volume of sound data to be output from the headphone unit 14 according to the distance.

For example, the output control unit 17a causes the signal processing unit 12 to change the volume of the sound data so that the volume of the sound data to be transmitted to the loudspeaker device 2a is increased and the volume of the sound data to be output from the headphone unit 14 is decreased as the distance between the headphone device 1a and the loudspeaker device 2a is smaller.

Next, the output control unit 17a transmits the sound data for the loudspeaker of which the volume has been changed to the loudspeaker device 2a and causes the sound data for the headphone to be output from the headphone unit 14 (step S303). The output control unit 17a causes the signal processing unit 12 to output the sound data for the loudspeaker of which the volume has been changed to the communication unit 15a. The output control unit 17a causes the communication unit 15a to transmit the sound data output by the signal processing unit 12 to the loudspeaker device 2a. Further, the output control unit 17a causes the signal processing unit 12 to output the sound data for the headphone of which the volume has been changed to the HP amplifier 13 and causes the sound data to be output from the headphone unit 14.

Note that when the headphone device 1a and the loudspeaker device 2a are connected to each other through contact (for example, when the distance is 0 m), the output control unit 17a stops the output of the headphone unit 14. After the process of step S303, the output control unit 17a returns the process to step S301.

Further, in step S304, the output control unit 17a causes the received sound data to be output from the headphone unit 14 and stops the transmission to the loudspeaker device 2a. The output control unit 17a causes the signal processing unit 12 to output the sound data received by the wireless communication unit 11 to the HP amplifier 13. The output control unit 17a causes the HP amplifier 13 to convert the sound data output by the signal processing unit 12 into a sound signal and output the sound signal to the headphone unit 14. Accordingly, the headphone unit 14 outputs (emits) the sound based on the sound data received by the wireless communication unit 11 from the headphone unit 14. Further, the output control unit 17a causes the signal processing unit 12 to stop the output of the sound data to be transmitted to the loudspeaker device 2a and causes the communication unit 15a to stop the transmission to the loudspeaker device 2a. After the process of step S304, the output control unit 17a returns the process to step S301.

Further, since the operation of the loudspeaker device 2a according to the embodiment (an acoustic output control process of the loudspeaker device 2a) is the same as that in the first embodiment illustrated in FIG. 4 described above, description thereof will be omitted herein.

As described above, the acoustic system 100a according to the embodiment includes the headphone device 1a and the loudspeaker device 2a. The headphone device 1a includes the output control unit 17a (a first output control unit) that transmits the sound data received through non-contact communication from the sound output device (for example, the transmission device 4 or the smartphone 5) that outputs sound data, to the loudspeaker device 2a when the headphone device 1a and the loudspeaker device 2a are connected to each other through non-contact communication and causes the sound based on the sound data to be output from the headphone unit 14 when the headphone device 1a (the own device) and the loudspeaker device 2a are not connected to each other through non-contact communication. When the headphone device 1a and the loudspeaker device 2a are connected to each other through non-contact communication, the loudspeaker device 2a includes the output control unit 32a (a second output control unit) that causes the sound based on the sound data transmitted from the headphone device 1a to be output from the loudspeaker 23.

Thus, the acoustic system 100a according to the embodiment achieves the same effects as those in the first embodiment, and it is possible to improve convenience in switching between the outputs of the headphone unit 14 and the loudspeaker 23.

Further, in the embodiment, the connection between the headphone device 1a and the loudspeaker device 2a includes connection through non-contact communication. When the headphone device 1a and the loudspeaker device 2a are connected to each other through non-contact communication, the output control unit 17a transmits the sound data to the loudspeaker device 2a and causes the sound based on the sound data to be output from the headphone unit 14.

Thus, in the acoustic system 100a according to the embodiment, for example, when switching between the outputs of the headphone unit 14 and the loudspeaker 23 is performed, the output of the sound is not interrupted, and therefore, convenience can be further improved.

Further, in the embodiment, the output control unit 17a changes a ratio between a volume of the sound based on the sound data to be transmitted to the loudspeaker device 2a and a volume of the sound based on the sound data to be output from the headphone unit 14 according to the distance between the headphone device 1a and the loudspeaker device 2a. The output control unit 17a performs control so that the volume of the sound data to be transmitted to the loudspeaker device 2a is increased and the volume of the sound data to be output from the headphone unit 14 is decreased as the distance between the headphone device 1a and the loudspeaker device 2a is shorter.

Accordingly, in the acoustic system 100a according to the embodiment, for example, when switching between the outputs of the headphone unit 14 and the loudspeaker 23 is performed, the switching can be performed without interrupting the output of the sound unnaturally, and therefore, it is possible to further improve convenience.

Specifically, in the embodiment, when the user approaches the loudspeaker device 2a while listening to the sound output from the headphone device 1a, the sound gradually starts to be heard from the loudspeaker device 2a, and when the headphone device 1a is mounted (set) on the loudspeaker device 2a, the output of sound from the headphone device 1a is stopped. Thus, in the acoustic system 100a according to the embodiment, when the user switches the output from the headphone unit 14 to the loudspeaker 23, it is possible to perform the switching without unnaturally interrupting the output of the sound.

For example, although the example in which the headphone device 1 (1a) includes the connection determination unit 16 (16a) has been described in the above embodiments, the loudspeaker device 2 (2a) or both the headphone device 1 (1a) and the loudspeaker device 2 (2a) may include the connection determination unit 16 (16a).

Further, although the example in which the headphone device 1 (1a) includes the signal processing unit 12 has been described in each of the above embodiments, the loudspeaker device 2 (2a) or both the headphone device 1 (1a) and the loudspeaker device 2 (2a) may include the signal processing unit 12.

Further, the example in which the sound output device is the transmission device 4 connected to the guitar 3 and the smartphone 5 has been described in each of the above embodiments, but the present invention is not limited thereto. The sound output device may be, for example, the transmission device 4 connected to another musical instrument other than the guitar 3, or may be another electronic musical instrument capable of wireless communication, a personal digital assistant (PDA), a personal computer, or the like.

Further, although the example in which the headphone device 1 (1a) receives the sound data from the two sound output devices including the transmission device 4 and the smartphone 5 as an example of a plurality of sound output devices has been described in each of the above embodiments, sound data may be received from three or more sound output devices.

Further, although the example in which the wireless communication unit 11 uses the wireless communication based on Bluetooth (registered trademark) has been described in each of the above embodiments, the wireless communication may be another wireless communication such as wireless local area network (LAN).

Further, in each of the above-described embodiments, although the example in which the supply of the charging power from the loudspeaker device 2 (2a) to the headphone device 1 (1a) is performed in a contact type using the charging terminal (charging electrode) has been described, the supply may be performed in non-contact power supply (wireless power supply scheme).

Further, in the second embodiment, the example in which the output control unit 32a causes the signal processing unit 12 to generate the sound data of which the volume has been changed, and the volume is changed has been described; however, the present invention is not limited thereto. The output control unit 32a, for example, may control an amplification factor of the HP amplifier 13 or the SP amplifier 22 of the loudspeaker device 2a to change the volume.

Further, although the example in which the communication unit 15a and the communication unit 21a use the noncontact communication using the infrared rays has been described in the second embodiment, another noncontact communication such as a wireless local area network (LAN) may be used. Further, measurement of the distance between the headphone device 1a and the loudspeaker device 2a is not limited to a scheme using the infrared rays, and another scheme may be used.

Note that each of the configurations included in the acoustic system 100 (100a) described above has a computer system included therein. The processing steps in each of the configurations included in the acoustic system 100 (100a) described above are stored in the form of a program in a computer-readable recording medium, and the process is performed by the computer reading and executing this program. Further, the computer-readable recording medium refers to a magnetic disk, a magneto-optical disc, a CD-ROM, a DVD-ROM, a semiconductor memory, or the like. Further, a computer program thereof may be distributed to a computer through a communication line, and a computer receiving this distribution may execute the program.

While the embodiments of the invention have been described and illustrated above, the present invention is not limited to the above embodiments. Various modifications can be made without departing from the scope of the present invention.

## Claims

1. An acoustic system comprising:
a headphone device (1, 1a); and
a loudspeaker device (2, 2a),
the headphone device being configured to receive sound data through wireless communication from a sound output device (4, 5), and the headphone device comprising an output control unit (17, 17a) that is configured to transmit the sound data to the loudspeaker device if the headphone device and the loudspeaker device are connected to each other, and the headphone device being configured to output a sound from a headphone, and
the loudspeaker device comprising an output control unit (32, 32a) that is configured to cause a sound to be output from a loudspeaker if the headphone device and the loudspeaker device are connected to each other, the sound being generated based on the sound data transmitted from the headphone device,
wherein a connection between the headphone device and the loudspeaker device comprises a connection using non-contact communication,
wherein the output control unit of the headphone device is configured to transmit the sound data to the loudspeaker device and to cause the sound based on the sound data to be output from the headphone, if the headphone device and the loudspeaker device are connected to each other through the non-contact communication,
wherein the output control unit of the headphone device is configured to change a ratio between a first volume and a second volume according to a distance between the headphone device and the loudspeaker device, the first volume being a volume of sound based on sound data to be transmitted to the loudspeaker device, and the second volume being a volume of sound based on sound data to be output from the headphone.

2. The acoustic system according to claim 1,
wherein the headphone device further comprises a synthesis processing unit that is configured to generate synthesized sound data based on a plurality of types of sound data received from a plurality of sound output devices comprising the sound output device, and
wherein the output control unit of the headphone device is configured to transmit the synthesized sound data to the loudspeaker device, if the headphone device and the loudspeaker device are connected to each other.

3. The acoustic system according to claim 1 or 2,
wherein the headphone device further comprises a secondary battery that is configured to supply power for operating the headphone device, and
the loudspeaker device further comprises a charging control unit that is configured to control supply of charging power for charging the secondary battery if the headphone device and the loudspeaker device are connected to each other.

4. An acoustic output method comprising:
transmitting, by a headphone device (1, 1a), sound data to a loudspeaker device if the headphone device and the loudspeaker device are connected to each other, the headphone device (1, 1a) being configured to output sound from a headphone; and
causing, by the loudspeaker device (2, 2a), a sound to be output from at least one loudspeaker (23) of the loudspeaker device (2, 2a), if a headphone device (1, 1a) and the loudspeaker device (2, 2a) are connected to each other, the sound being generated based on sound data transmitted from the headphone device (1, 1a) that has received the sound data through wireless communication from a sound output device (4, 5),
wherein a connection between the headphone device and the loudspeaker device comprises a connection using non-contact communication,
wherein the headphone device transmits the sound data to the loudspeaker device and causes the sound based on the sound data to be output from the headphone, if the headphone device and the loudspeaker device are connected to each other through the non-contact communication,
wherein the headphone device changes a ratio between a first volume and a second volume according to a distance between the headphone device and the loudspeaker device, the first volume being a volume of sound based on sound data to be transmitted to the loudspeaker device, and the second volume being a volume of sound based on sound data to be output from the headphone.

## Patentansprüche

1. Ein akustisches System, bestehend aus:
einer Kopfhörervorrichtung (1, 1a); und
eine Lautsprechervorrichtung (2, 2a),
wobei die Kopfhörervorrichtung so konfiguriert ist, dass sie Tondaten durch drahtlose Kommunikation von einer Tonausgabevorrichtung (4, 5) empfängt, und die Kopfhörervorrichtung eine Ausgabesteuereinheit (17, 17a) umfasst, die so konfiguriert ist, dass sie die Tondaten an die Lautsprechervorrichtung überträgt, wenn die Kopfhörervorrichtung und die Lautsprechervorrichtung miteinander verbunden sind, und die Kopfhörervorrichtung so konfiguriert ist, dass sie einen Ton von einem Kopfhörer ausgibt, und
wobei die Lautsprechervorrichtung eine Ausgabesteuereinheit (32, 32a) umfasst, die konfiguriert ist, um zu bewirken, dass ein Ton von einem Lautsprecher ausgegeben wird, wenn die Kopfhörervorrichtung und die Lautsprechervorrichtung miteinander verbunden sind, wobei der Ton auf der Grundlage der von der Kopfhörervorrichtung übertragenen Tondaten erzeugt wird,
wobei eine Verbindung zwischen der Kopfhörervorrichtung und der Lautsprechervorrichtung eine Verbindung unter Verwendung kontaktloser Kommunikation umfasst,
wobei die Ausgabesteuereinheit der Kopfhörervorrichtung so konfiguriert ist, dass sie die Tondaten an die Lautsprechervorrichtung überträgt und bewirkt, dass der auf den Tondaten basierende Ton aus dem Kopfhörer ausgegeben wird, wenn die Kopfhörervorrichtung und die Lautsprechervorrichtung durch die kontaktlose Kommunikation miteinander verbunden sind,
wobei die Ausgabesteuereinheit der Kopfhörervorrichtung so konfiguriert ist, dass sie ein Verhältnis zwischen einer ersten Lautstärke und einer zweiten Lautstärke entsprechend einem Abstand zwischen der Kopfhörervorrichtung und der Lautsprechervorrichtung ändert, wobei die erste Lautstärke eine Lautstärke des Tons ist, der auf Tondaten basiert, die zu der Lautsprechervorrichtung zu übertragen sind, und die zweite Lautstärke eine Lautstärke des Tons ist, die auf Tondaten basiert, die von dem Kopfhörer auszugeben sind.

2. Das akustische System nach Anspruch 1,
wobei die Kopfhörervorrichtung ferner eine Syntheseverarbeitungseinheit umfasst, die so konfiguriert ist, dass sie synthetisierte Klangdaten basierend auf einer Vielzahl von Typen von Klangdaten erzeugt, die von einer Vielzahl von Klangausgabevorrichtungen empfangen werden, die die Klangausgabevorrichtung umfassen, und
wobei die Ausgabesteuereinheit der Kopfhörervorrichtung so konfiguriert ist, dass sie die synthetisierten Tondaten an die Lautsprechervorrichtung überträgt, wenn die Kopfhörervorrichtung und die Lautsprechervorrichtung miteinander verbunden sind.

3. Das akustische System nach Anspruch 1 oder 2,
wobei die Kopfhörervorrichtung ferner eine Sekundärbatterie umfasst, die so konfiguriert ist, dass sie Strom zum Betrieb der Kopfhörervorrichtung liefert, und
die Lautsprechervorrichtung ferner eine Ladesteuereinheit umfasst, die so konfiguriert ist, dass sie die Zufuhr von Ladeleistung zum Laden der Sekundärbatterie steuert, wenn die Kopfhörervorrichtung und die Lautsprechervorrichtung miteinander verbunden sind.

4. Eine akustische Ausgabe-Methode, umfassend:
Übertragen, durch eine Kopfhörervorrichtung (1, 1a), von Tondaten an eine Lautsprechervorrichtung, wenn die Kopfhörervorrichtung und die Lautsprechervorrichtung miteinander verbunden sind, wobei die Kopfhörervorrichtung (1, 1a) konfiguriert ist, Ton von einem Kopfhörer auszugeben; und
Bewirken, durch die Lautsprechervorrichtung (2, 2a), dass ein Ton von mindestens einem Lautsprecher (23) der Lautsprechervorrichtung (2, 2a) ausgegeben wird, wenn eine Kopfhörervorrichtung (1, 1a) und die Lautsprechervorrichtung (2, 2a) miteinander verbunden sind, wobei der Ton auf der Grundlage von Tondaten erzeugt wird, die von der Kopfhörervorrichtung (1, 1a) übertragen werden, die die Tondaten durch drahtlose Kommunikation von einer Tonausgabevorrichtung (4, 5) empfangen hat,
wobei eine Verbindung zwischen der Kopfhörervorrichtung und der Lautsprechervorrichtung eine Verbindung unter Verwendung kontaktloser Kommunikation umfasst,
wobei die Kopfhörervorrichtung die Tondaten an die Lautsprechervorrichtung überträgt und bewirkt, dass der auf den Tondaten basierende Ton aus dem Kopfhörer ausgegeben wird, wenn die Kopfhörervorrichtung und die Lautsprechervorrichtung durch die berührungslose Kommunikation miteinander verbunden sind,
wobei die Kopfhörervorrichtung ein Verhältnis zwischen einer ersten Lautstärke und einer zweiten Lautstärke gemäß einem Abstand zwischen der Kopfhörervorrichtung und der Lautsprechervorrichtung ändert, wobei die erste Lautstärke eine Lautstärke des Tons basierend auf Tondaten ist, die zu der Lautsprechervorrichtung zu übertragen sind, und die zweite Lautstärke eine Lautstärke des Tons basierend auf Tondaten ist, die von dem Kopfhörer auszugeben sind.

## Revendications

1. Système acoustique comprenant :
un dispositif à écouteurs (1, 1a) ; et
un dispositif à haut-parleurs (2, 2a),
le dispositif à écouteurs étant configuré pour recevoir des données de son par le biais d'une communication sans fil depuis un dispositif de sortie de son (4, 5), et le dispositif à écouteurs comprenant une unité de commande de sortie (17, 17a) qui est configurée pour transmettre les données de son au dispositif à haut-parleurs si le dispositif à écouteurs et le dispositif à haut-parleurs sont connectés l'un à l'autre, et le dispositif à écouteurs étant configuré pour sortir un son depuis un écouteur, et
le dispositif à haut-parleurs comprenant une unité de commande de sortie (32, 32a) qui est configurée pour amener un son à sortir depuis un haut-parleur si le dispositif à écouteurs et le dispositif à haut-parleurs sont connectés l'un à l'autre, le son étant généré sur la base des données de son transmises depuis le dispositif à écouteurs,
dans lequel une connexion entre le dispositif à écouteurs et le dispositif à haut-parleurs comprend une connexion utilisant une communication sans contact,
dans lequel l'unité de commande de sortie du dispositif à écouteurs est configurée pour transmettre les données de son au dispositif à haut-parleurs et pour amener le son basé sur les données de son à sortir depuis l'écouteur, si le dispositif à écouteurs et le dispositif à haut-parleurs sont connectés l'un à l'autre par le biais de la communication sans contact,
dans lequel l'unité de commande de sortie du dispositif à écouteurs est configurée pour changer un rapport entre un premier volume et un second volume conformément à une distance entre le dispositif à écouteurs et le dispositif à haut-parleurs, le premier volume étant un volume de son basé sur des données de son devant être transmises au dispositif à haut-parleurs, et le second volume étant un volume de son basé sur des données de son devant sortir depuis l'écouteur.

2. Système acoustique selon la revendication 1,
dans lequel le dispositif à écouteurs comprend en outre une unité de traitement de synthèse qui est configurée pour générer des données de son synthétisées sur la base d'une pluralité de types de données de son reçues depuis une pluralité de dispositifs de sortie de son comprenant le dispositif de sortie de son, et
dans lequel l'unité de commande de sortie du dispositif à écouteurs est configurée pour transmettre les données de son synthétisées au dispositif à haut-parleurs, si le dispositif à écouteurs et le dispositif à haut-parleurs sont connectés l'un à l'autre.

3. Système acoustique selon la revendication 1 ou 2,
dans lequel le dispositif à écouteurs comprend en outre une batterie secondaire qui est configurée pour fournir du courant permettant de faire fonctionner le dispositif à écouteurs, et
le dispositif à haut-parleurs comprend en outre une unité de commande de charge qui est configurée pour commander une fourniture de courant de charge permettant de charger la batterie secondaire si le dispositif à écouteurs et le dispositif à haut-parleurs sont connectés l'un à l'autre.

4. Procédé de sortie acoustique comprenant :
la transmission, par un dispositif à écouteurs (1, 1a), de données de son à un dispositif à haut-parleurs si le dispositif à écouteurs et le dispositif à haut-parleurs sont connectés l'un à l'autre, le dispositif à écouteurs (1, 1a) étant configuré pour sortir un son depuis un écouteur ; et
le fait d'amener, par le dispositif à haut-parleurs (2, 2a), un son à sortir depuis au moins un haut-parleur (23) du dispositif à haut-parleurs (2, 2a), si un dispositif à écouteurs (1, 1a) et le dispositif à haut-parleurs (2, 2a) sont connectés l'un à l'autre, le son étant généré sur la base de données de son transmises depuis le dispositif à écouteurs (1, 1a) qui a reçu les données de son par le biais d'une communication sans fil depuis un dispositif de sortie de son (4, 5),
dans lequel une connexion entre le dispositif à écouteurs et le dispositif à haut-parleurs comprend une connexion utilisant une communication sans contact,
dans lequel le dispositif à écouteurs transmet les données de son au dispositif à haut-parleurs et amène le son basé sur les données de son à sortir depuis l'écouteur, si le dispositif à écouteurs et le dispositif à haut-parleurs sont connectés l'un à l'autre par le biais de la communication sans contact,
dans lequel le dispositif à écouteurs change un rapport entre un premier volume et un second volume conformément à une distance entre le dispositif à écouteurs et le dispositif à haut-parleurs, le premier volume étant un volume de son basé sur des données de son devant être transmises au dispositif à haut-parleurs, et le second volume étant un volume de son basé sur des données de son devant sortir depuis l'écouteur.
